# EUROPÄISCHE PATENTANMELDUNG

(11) **EP 1 659 051 A2**
(43) Veröffentlichungstag der Anmeldung: **24.05.2006**
(21) Anmeldenummer: 05024752.7
(22) Anmeldetag: 12.11.2005
(51) Int. Cl.: B62D 65/16, B62D 33/00

(54) **Tragstruktur eines Nutzfahrzeugs**

(30) Priorität: 18.11.2004 DE 102004055570
(71) Anmelder: DaimlerChrysler AG, 70567 Stuttgart (DE)
(72) Erfinder: Ladenburger, Werner, 71364 Winnenden (DE)

(57) **Zusammenfassung**

Die Erfindung betrifft eine Tragstruktur (1) eines Nutzfahrzeugs, insbesondere zur Aufnahme eines modularen Abgasreinigungssystems (A).

Die erfindungsgemäße Tragstruktur (1) umfasst ein Paar annähernd parallel zueinander ausgerichtete L-förmige Trägerelemente (5, 5'; 6, 6') zur Montage an einem mit einem Längsträger (2) des Nutzfahrzeugs fest verbundenen Holm (3, 3'), wobei die einem Paar zugeordneten Trägerelemente (5, 5'; 6, 6') im montierten Zustand der Tragstruktur (1) den Holm (3, 3') anliegend umgreifen und im nicht montierten Zustand derart voneinander abgespreizt ausgebildet sind, dass ihr Abstand im Bereich der Anlage am Holm (3, 3') die Holmbreite um ein vorgebbares Maß überschreitet.

## Beschreibung

Die Erfindung betrifft eine Tragstruktur eines Nutzfahrzeugs, insbesondere zur Aufnahme eines modularen Abgasreinigungssystems.

Aus der DE 102 14 495 A1 ist ein Standardtraggestell zur Anordnung hinter einem LKW-Fahrerhaus bekannt. Am Traggestell können verschiedene Fahrzeugteile und -aggregate angebracht werden, so dass nach deren Anbringung ein komplett vormontiertes Anbaumodul vorliegt, welches für unterschiedliche Fahrzeugtypen geeignet ist. Entsprechend der Anordnung hinter dem Fahrerhaus weist das Traggestell zwei vergleichsweise hoch bauende Seitenwangen auf, deren Abstand etwa dem Abstand der LKW-Längsträger entspricht. An ihrem unteren Ende sind die Seitenwangen über einen Querträger fest verbunden. In ihrem oberen Bereich sind sie über Querstreben gegenseitig abgestützt. Dies bedingt im oberen Bereich eine begrenzte Stabilität. Aufgrund der Bauweise und der darauf abgestimmten Anordnung hinter dem Fahrerhaus ist der Einsatz des Traggestells zur Aufnahme von voluminösen und/oder schweren Bauteilen nicht geeignet. Außerdem ist in vielen Fällen eine bessere Zugänglichkeit erwünscht.

Aufgabe der vorliegenden Erfindung ist es deshalb, eine Tragstruktur für ein Nutzfahrzeug anzugeben, welche zur Aufnahme vergleichsweise großer und schwerer Bauteile geeignet ist, die ferner eine Vormontage der aufzunehmenden Bauteile ermöglicht und die weiter in einfacher Weise am Nutzfahrzeug montiert werden kann und eine gute Zugänglichkeit der Bauteile ermöglicht.

Diese Aufgabe wird durch eine Tragstruktur mit den Merkmalen des Anspruchs 1 gelöst.

Charakteristisch für die erfindungsgemäße Tragstruktur ist ein Paar von L-förmigen Trägerelementen, welche annähernd parallel ausgerichtet sind. Durch die L-Form besitzen die Trägerelemente ein sehr hohes Widerstandsmoment gegenüber einer Abbiegung der Schenkel, was sie als Trägerelemente für schwere Lasten besonders geeignet macht. Im montierten Zustand der Tragstruktur umgreifen die Trägerelemente eines Paares anliegend einen Holm, der mit einem Längsträger des Nutzfahrzeugs fest verbunden ist. Über die Anlage an dem am Längsträger befestigten Holm erfolgt die Kraft- und Drehmomentübertragung auf die Längsträger des Fahrzeugs, die üblicherweise eigens zur Aufnahme hoher Kräfte ausgelegt sind. Im nicht montierten Zustand sind die Trägerelemente im Bereich ihrer Anlage am Holm voneinander so abgespreizt, dass ihr Abstand die Breite des Holms um ein vorgebbares Maß überschreitet. Durch die Abspreizung ist eine einfache Anbringung am Nutzfahrzeug gewährleistet, da Abmessungstoleranzen ausgeglichen werden und die L-förmigen Trägerelemente ohne Schwierigkeit in ihre Position zur Anlage und Befestigung am Holm gebracht werden können. Vorzugsweise ist eine V-förmige Abspreizung vorgesehen. Auf diese Weise wird die lagerichtige Annäherung der Tragstruktur zur Befestigung der Trägerelemente am Holm weiter erleichtert. Es ist vorgesehen, dass die Abspreizung der Trägerelemente nur wenige Winkelgrade beträgt und die Trägerelemente eines Paares ansonsten einen festen Abstand voneinander aufweisen und parallel zueinander orientiert sind. Im Bereich der Abspreizung sind sie elastisch biegbar ausgeführt, so dass die Abspreizung unter Einwirkung einer Druckkraft rückgängig gemacht werden kann und die Trägerelemente bei der Montage am Holm zur Anlage kommen. Vorzugsweise sind die Schenkel der L-förmigen Trägerelemente ungleich lang ausgebildet, wobei die kürzeren Schenkel zur Anlage und Befestigung am Holm vorgesehen sind. Die längeren Schenkel ragen daher seitlich vom Längsträger ab, wodurch die Aufnahme voluminöser Traglasten verbessert wird.

In Ausgestaltung der Erfindung sind die Trägerelemente an einem Bolzen des Holms einhängbar ausgebildet. Hierfür ist es vorteilhaft, wenn die Trägerelemente im oberen Bereich ihrer Anlagefläche am Holm hakenförmig ausgebildet sind, so dass die entsprechenden Aussparungen der beiden Trägerelemente eines Trägerelementepaares in die seitlich vom Holm abragenden Bolzenteile eingehängt werden können. Vorzugsweise ist der Bolzen fest mit dem Holm verbunden, er kann jedoch auch in eine Aufnahmeöffnung des Holms eingesteckt sein. Vorteilhaft ist es, wenn der Bolzen jeweils seitlich am Holm derart abragt, dass insgesamt die Breite der abgespreizten Trägerelemente im Bereich ihrer größten Abspreizung übertroffen wird. Auf diese Weise ist die Montage der Tragstruktur weiter vereinfacht, da nach Annäherung des Trägerelementepaares in den Bereich des Holms die Tragstruktur lediglich abgesenkt werden muss, um eingehängt zu werden und damit lagemäßig beispielsweise in Bezug auf eine Verschraubung bereits vorfixiert zu sein.

Eine weiter vereinfachte Montage und weiter verbesserte Lagefixierung, insbesondere in horizontaler Richtung, wird gemäß einer weiteren Ausgestaltung der Erfindung erreicht, wenn wenigstens eines der Trägerelemente einen profilierten Randabschnitt zur Anlage an einem korrespondierenden Anschlagelement des Holms aufweist. Vorteilhaft ist ein am Hol befestigtes und seitlich abragendes Flach- oder Winkelmaterial als Anschlagelement vorgesehen, wobei das Trägerelement dann eine Profilierung in Form einer Aussparung oder Einkerbung aufweist, in welcher das Anschlagelement zur Anlage kommt und welche das Anschlagelement umgreift. Vorzugsweise weist die Aussparung etwas größere Abmessungen als das Anschlagelement auf, um ein rasches und unkompliziertes lagerichtiges Zusammenführen zu ermöglichen. Vorteilhaft ist hierbei eine an die Form des Anschlagelements angepasste, sich verjüngende Aussparung, so dass beim Anfahren der Tragstruktur bei der Montage eine Selbstjustierung der Ausrichtung der Tragstruktur ermöglicht ist.

In weiterer Ausgestaltung der Erfindung sind die Trägerelemente mittels einer Schraubverbindung am Holm klemmend fixierbar. Hierfür sind entsprechende Durchgangslöcher im Holm und für die Trägerelemente vorgesehen. Nach weitgehender Annäherung der Tragstruktur an ihre endgültige Position werden Schrauben in die vorgesehenen Durchgangslöcher von Trägerelement und Holm gesteckt und die Schraubverbindung angezogen, so dass sich eine klemmende Verbindung der Tragstruktur bzw. der Trägerelemente mit dem Holm ergibt. Durch entsprechende Versuche konnte nachgewiesen werden, dass die solcherart geschaffene Klemmverbindung der Tragstruktur bzw. der Trägerelemente mit dem Holm zur Aufnahme hoher Kräfte und Drehmomente besonders geeignet ist. Um eine hohe Klemmkraft zu ermöglichen, können weitere Verbesserungen bzw. Verstärkungen im Bereich der Schraubverbindungen vorgesehen sein. Beispielsweise können seitlich am Holm Stegbleche angebracht sein oder die Schraublöcher sind mit Distanzhülsen versehen.

In weiterer Ausgestaltung der Erfindung sind die Trägerelemente mit einem Auflagerahmen fest verbunden. Durch den Auflagerahmen wird eine vergrößerte Auflagefläche geschaffen, wobei durch die feste Verbindung des Auflagerahmens mit den Trägerelementen eine Krafteinleitung in diese und weiter über den Holm auf den Längsträger erfolgt.

In weiterer Ausgestaltung der Erfindung umfasst der Auflagerahmen wenigstens zwei annähernd parallel_verlaufende und rechtwinklig zu den Trägerelementen orientierte biegesteife Längsstreben. Die Längsstreben sind somit derart orientiert, dass sie im montierten Zustand der Tragstruktur parallel zum Längsträger verlaufen, wobei über den Abstand der Längsstreben die vom Längsträger aus gesehen seitliche Ausladung der Tragstruktur festgelegt ist.

In weiterer Ausgestaltung der Erfindung sind die Längsstreben an ihrem jeweiligen Endbereich über Querstreben miteinander verbunden. Dadurch wird die Stabilität und Tragkraft der Tragstruktur weiter erhöht.

In weiterer Ausgestaltung der Erfindung ist eine Abdeckplatte zur Abdeckung der Oberseite und/oder der Unterseite des Auflagerahmens vorgesehen. Dadurch wird eine ebene Auflagefläche geschaffen, auf welche die entsprechenden Bauteile abgelegt und bequem vormontiert werden können. Bei Verwendung einer unteren und oberen Abdeckplatte ist zudem im Rahmeninnenbereich ein Stauraum für Anbauteile geschaffen, die infolge der Abdeckung vor Umwelteinflüssen geschützt sind. Eine feste Verbindung der Abdeckplatte mit dem Auflagerahmen verbessert zudem die Verzugsfestigkeit der Tragstruktur, so dass diese größeren Schubkräften widerstehen kann. Die Verzugsfestigkeit kann durch Kreuzversteifungen des Auflagerahmens weiter erhöht werden. Diese können alternativ oder zusätzlich zur Abdeckplatte eingesetzt werden.

In weiterer Ausgestaltung der Erfindung ist ein am Auflagerahmen befestigtes Tragblech an der dem Längsträger zugewandten Seite des Auflagerahmens vorgesehen. Dieses ist vorzugsweise im Bereich zwischen zwei Holmen vorgesehen und dient der Aufnahme weiterer Bauteile.

In weiterer Ausgestaltung der Erfindung ist ein am Auflagerahmen befestigter treppenförmiger Aufstieg an der dem Längsträger abgewandten Seite des Auflagerahmens vorgesehen. Auf diese Weise sind obere Bereiche des Nutzfahrzeugs zugänglich gemacht, wobei für die Begehbarkeit des Aufstiegs die Tragkraft der Tragstruktur ausgenutzt wird.

In weiterer Ausgestaltung der Erfindung ist im Bereich des Holms ein erstes Auflageelement zur Abstützung eines insbesondere tonnenförmigen Abgasreinigungselements des Abgasreinigungssystems vorgesehen. Vorzugsweise weist das erste Auflageelement eine gekrümmte Form auf, die einem Eckbereich des Abgasreinigungselements angepasst ist. Auf diese Weise wird eine seitliche Abstützung und Lagefixierung für das Abgasreinigungselement erreicht.

In weiterer Ausgestaltung der Erfindung ist in einem dem Längsträger abgewandten Bereich des Auflagerahmens ein zweites Auflageelement zur Abstützung des Abgasreinigungselements des Abgasreinigungssystems vorgesehen. Dadurch ist die Lagefixierung des Abgasreinigungselements weiter verbessert, wodurch eine Verschiebung des Abgasreinigungselements innerhalb des Moduls auch bei starken Fahrzeugbewegungen vermieden wird.

Vorteilhafte Ausführungsformen der Erfindung sind in den Zeichnungen veranschaulicht und werden nachfolgend beschrieben. Dabei sind die vorstehend genannten und nachfolgend noch zu erläuternden Merkmale nicht nur in der jeweils angegebenen Merkmalskombination, sondern auch in anderen Kombinationen oder in Alleinstellung verwendbar, ohne den Rahmen der vorliegenden Erfindung zu verlassen.

Es zeigen:
- Fig. 1: eine erste Ansicht einer bevorzugten Ausführungsform der erfindungsgemäßen Tragstruktur in einer ersten Ausbaustufe,
- Fig. 2: die in Fig. 1 dargestellte Tragstruktur in einer zweiten Ausbaustufe,
- Fig. 3: eine zweite Ansicht der Ausführungsform der Tragstruktur gemäß Fig. 1 und Fig. 2,
- Fig. 4: eine Detailansicht der Befestigungsstelle von Trägerelementen an einem mit einem Anschlag versehenen Holm und
- Fig. 5: die erfindungsgemäße Tragstruktur in montiertem Zustand und aufgebaut mit einem modularen Abgasreinigungssystem.

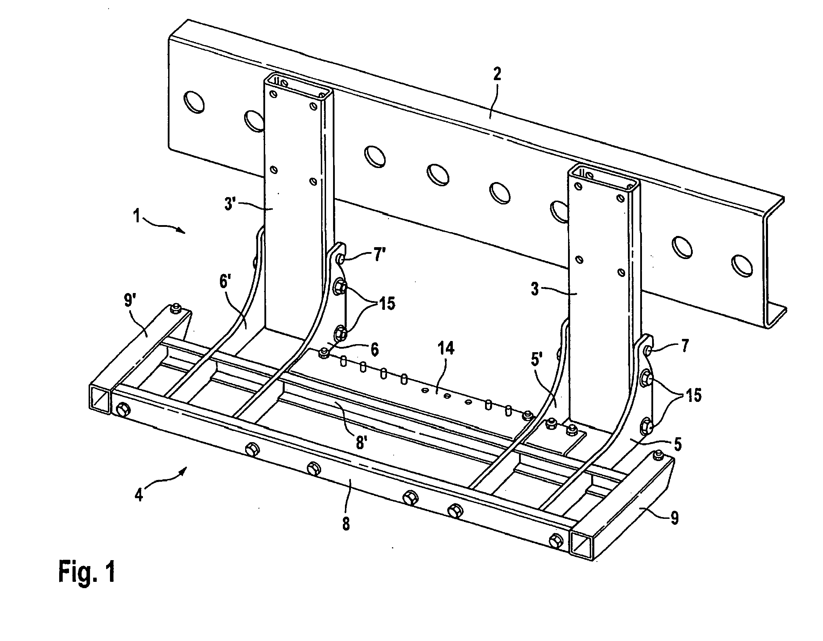

In Fig. 1 ist eine bevorzugte Ausführungsform der erfindungsgemäßen Tragstruktur 1 in einer ersten Ausbaustufe im montierten Zustand dargestellt. Die Tragstruktur 1 ist für ein nicht näher dargestelltes Nutzfahrzeug vorgesehen und wird wie gezeigt an Holmen 3, 3' befestigt, welche mit einem Längsträger 2 des Nutzfahrzeugs fest verbunden sind. Die Holme 3, 3' können Schweißkonstruktion oder auch wie dargestellt als Vierkant-Hohlprofil ausgebildet sein und sind in einem vorgegebenen Abstand voneinander am Längsträger 2 befestigt. Entsprechend der vorgesehenen Aufnahme bzw. Halterung von großen und/oder schweren Peripherieeinheiten ist die Tragstruktur 1 und ihre Anbringung am Nutzfahrzeug besonders verwindungssteif und stabil bei geringem Eigengewicht ausgeführt. Dies wird insbesondere durch als Flachmaterial ausgebildete L-förmige Stahl-Trägerelemente 5, 5', 6, 6' erreicht, wobei jeweils zwei Trägerelemente 5, 5' und 6, 6' ein Paar bilden. Die Trägeelementpaare weisen voneinander einen Abstand auf, der dem der Holme entspricht, wobei die Trägerelemente 5, 5', 6, 6' jeweils eines Paares durchgehend einen annähernd festen Abstand aufweisen, der etwa der Holmbreite entspricht. Obschon die hier dargestellte Tragstruktur 1 zwei Trägerelementpaare aufweist, sind auch Tragstrukturen mit nur einem Paar oder aber mit mehreren Paaren von Trägerelementen denkbar.

Vorzugsweise weisen die L-förmigen Trägerelemente 5, 5', 6, 6' unterschiedlich lang ausgeführte, rechtwinklig zueinander orientierte Schenkel auf, wobei vorzugsweise der kürzere Schenkel zur Befestigung an einem Holm 3, 3' vorgesehen ist. Zur Schaffung einer Auflagefläche sind die längeren Schenkel der Trägerelemente 5, 5', 6, 6' mit einem Auflagerahmen 4 fest verbunden. Vorzugsweise ist der Auflagerahmen 4 aus Vierkant-Hohlprofilen, T- oder U-Profilen gebildet, woraus einerseits eine hohe Biegesteifigkeit, andererseits ein geringes Eigengewicht resultiert. Alternativ kann der Auflagerahmen 4 jedoch auch als Pressteil ausgebildet sein. Der Auflagerahmen 4 ist hier aus zwei parallel zueinander und rechtwinklig zu den Trägerelementen 5, 5', 6, 6' orientierten und voneinander beabstandeten Längsstreben 8, 8' sowie aus zwei Querstreben 9, 9' aufgebaut. Dabei sind die Querstreben 9, 9' mit den Längsstreben 8, 8' in deren Endbereichen fest verbunden. Die Querstreben 9, 9' sind vorzugsweise ebenfalls als Vierkant-Hohlprofile, T- oder U-Profile ausgebildet und beispielsweise mittels einer Verschweißung fest mit den Längsstreben 8, 8' verbunden. Durch diese Konstruktion des Auflagerahmens 4 werden eine hohe Tragkraft und eine hohe Steifigkeit bei gleichzeitig geringem Eigengewicht erreicht.

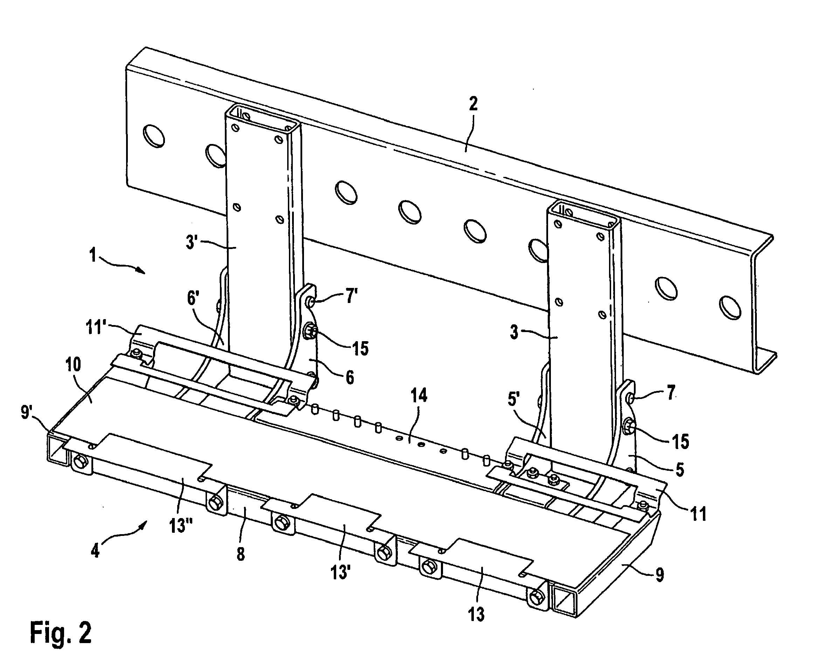

Mit dem Auflagerahmen 4, und den Trägerelementen (5, 5', 6, 6') ist bereits die Basisform der Tragstruktur 1 definiert. Diese ist als solche schon für eine Vormontage von darauf aufzubauenden Bauteilen geeignet. Vorzugsweise sind jedoch weitere Bauelemente vorgesehen, welche die Anwendungsmöglichkeiten der Tragstruktur 1 erweitern. Fig. 2 zeigt eine entsprechend erweiterte Ausbaustufe, wobei die Bauteile, soweit sie mit denen der Fig. 1 übereinstimmen, durch dieselben Bezugszeichen gekennzeichnet sind. Die in Fig. 2 dargestellte Ausführungsform der Tragstruktur 1 weist zusätzlich eine obere Abdeckplatte 10 auf, welche wie dargestellt vorzugsweise ringsum bündig mit dem Auflagerahmen 4 abschließt. Auf diese Weise wird eine ebene Ablagefläche geschaffen, auf der Bauteile angeordnet und befestigt werden können. Vorzugsweise ist auch eine in Fig. 2 nicht sichtbare untere Abdeckplatte vorgesehen. Durch eine nicht näher dargestellte feste Verbindung der Abdeckplatte(n) mit dem Auflagerahmen 4 wird ein besonders schubfestes Kastenprofil erhalten. Der Bereich des Inneren des Auflagerahmens 4 zwischen den Abdeckplatten kann in vorteilhafter Weise zur Aufnahme von weiteren, kleineren Bauteilen, wie beispielsweise von Elektronikbauteilen genutzt werden, die durch die Abdeckplatten vor Spritzwasser und mechanischen Beschädigungen geschützt sind. Weiter weist die Tragstruktur 1 in der dargestellten Ausbauform ein Tragblech 14 auf, welches im Bereich zwischen den Holmen 3, 3' an der dem Längsträger 2 zugewandten Seite am Auflagerahmen 4 befestigt ist. Das Tragblech 14 weist vorzugsweise ein Lochraster oder Schraublochmuster mit vorgegebenen Lochabständen auf, so dass Bauteile an vorbestimmten Positionen befestigt werden können.

Zur Befestigung der für die Tragstruktur vorgesehenen Bauteile kommt beispielsweise eine Spannbandbefestigung in Frage. Vorteilhaft ist es jedoch, hierfür wie in Fig. 2 dargestellt, am Auflagerahmen 4 erste Auflageelemente 11, 11' sowie zweite Auflageelemente 13, 13', 13" vorzusehen. Die ersten Auflageelemente 11, 11' sind dabei vorzugsweise im Bereich der Holme 3, 3' an der dem Längsträger 2 zugewandten Seite angeordnet, während die zweiten Auflageelemente 13, 13', 13" an der gegenüber liegenden Seite angeordnet sind. Die Auflageelemente 11, 11', 13, 13', 13" dienen der Abstützung insbesondere tonnenförmiger Abgasreinigungselemente, eines Schalldämpfers oder eines Tanks, weshalb sie vorzugsweise eine gekrümmte Form aufweisen, um Eckbereiche der entsprechenden Bauteile zu umgreifen und dadurch seitlich abzustützen.

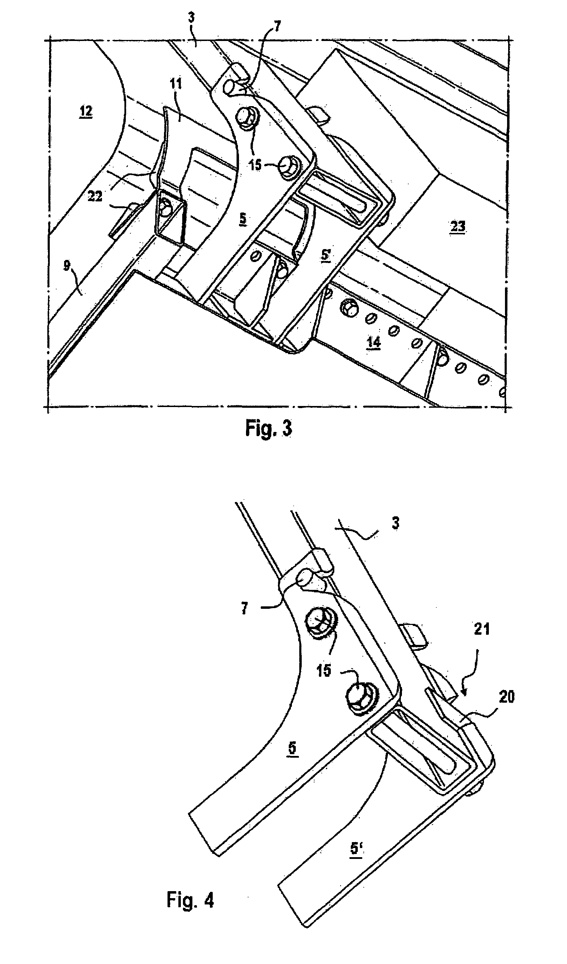

Die abstützende/und oder tragende Funktion eines ersten Auflageelementes 11 wird besonders aus der in Fig. 3 dargestellten Sicht auf einen Befestigungsbereich der Tragstruktur 1 deutlich. Die Kontur des Auflageelementes 11 ist der Rundung eines tonnenförmigen Abgasreinigungselementes 12 angepasst, wobei zusätzlich ein vorzugsweise keilförmiges Dämpferelement 22 für eine elastische Auflage vorgesehen sein kann. Aus der Darstellung in Fig. 3 ist ferner ersichtlich, dass der zwischen den Holmen 3, 3' vorhandene Raum in vorteilhafter Weise zur Unterbringung entsprechender Bauteile nutzbar ist. Bei dem in Fig. 3 an dieser Stelle angeordneten Bauteil 23 handelt es sich vorzugsweise um eine Versorgungseinheit bzw. Steuereinheit zum Betrieb von Abgasreinigungskomponenten, welche auf der Tragstruktur 1 aufgebaut sind. Die Versorgungseinheit wird vorzugsweise am Tragblech 14 befestigt und nimmt beispielsweise Steuerelektronik, Reduktionsmittelförderbauteile, Ventilen, Schaltelektrik und dergleichen auf.

Die Befestigung der Tragstruktur 1 an einem Holm 3 ist ebenfalls aus Fig. 3 ersichtlich, wobei nachfolgend zur näheren Erläuterung der Befestigung auch auf Fig. 1 Bezug genommen wird.

Vorzugsweise wird die Tragstruktur 1 in fertig aufgebautem Zustand an den Holmen 3, 3' montiert. Zur Anbringung der Tragstruktur 1 an den Holmen 3, 3' ist erfindungsgemäß für die Holme 3, 3' eine Bolzen- Hakenverbindung mit den Trägerelementen 5, 5', 6, 6' vorgesehen. Hierfür weisen die Holme 3, 3' einen Bolzen 7, 7' auf, welcher fest mit dem jeweiligen Holm 3, 3' verbunden ist oder auch in ein hierfür vorgesehenes Durchgangsloch eingeschoben ist. Weiter ist erfindungsgemäß vorgesehen, dass im nicht montierten Zustand die Trägerelemente 5, 5' und 6, 6' in dem für die Anlage am Holm 3, 3' vorgesehenen Bereich V-förmig voneinander abgespreizt sind und eine hakenförmige Aussparung aufweisen. Vorzugsweise ragen die Bolzen 7, 7' beiderseits seitlich vom jeweiligen Holm 3, 3' ab. Dabei ist vorgesehen, dass die Bolzen 7, 7' eine etwas größere Länge aufweisen, als das Abstandsmaß der Trägerelemente 5, 5', 6, 6' eines Trägerelementepaares im abgespreizten Zustand beträgt. Die kurzen Schenkel der Trägerelemente 5, 5', 6, 6' eines Trägerelementepaares weisen in dem für die Anlage am Holm 3, 3' vorgesehenen Bereich wiederum einen Abstand auf, welcher die Holmbreite um ein vorgebbares Maß überschreitet. Hierfür können wenige Zentimeter Übermaß ausreichen. Auf diese Weise werden Lagetoleranzen ausgeglichen und es ist eine einfache, rasche und fehlerfreie Montage der fertig aufgebauten, und damit schweren und unhandlichen Tragstruktur 1 ermöglicht.

Die V-förmige Abspreizung der Trägerelemente 5, 5' sowie 6, 6' voneinander ermöglicht gleichsam eine Selbstzentrierung mit einer raschen Annäherung der Tragstruktur 1 an ihre endgültige Position. Die Tragstruktur 1 kann ohne langwierige Justierungen auf einfache Weise in eine Position gebracht werden, in welcher sich die Holme 3, 3' zwischen den kurzen Schenkeln der L-förmigen Trägerelemente 5, 5' sowie 6, 6' befinden. Zur Vorfixierung braucht die Tragstruktur 1 danach lediglich, gegebenenfalls unter leichter Drehung, abgesenkt zu werden, wobei die abragenden Bolzenteile in die hakenförmige Aussparung der Trägerelemente 5, 5', 6, 6' eingreifen.

Eine weitere Verbesserung der Montage der Tragstruktur 1 wird erreicht, wenn wie in Fig.4 dargestellt, zumindest einer der Holme 3, 3' mit einem Anschlagelement 20 und ein korrespondierendes Trägerelement 5, 5' 6, 6' mit einer entsprechenden Aussparung 21 versehen ist. In Fig. 4 ist beispielhaft der Holm 3 mit lediglich einem als Flachmaterial ausgebildeten und seitlich abragenden Anschlagelement 20 dargestellt. Vorzugsweise weist jedoch jeder der Holme 3, 3' jeweils wenigstens zwei Anschlagelemente 20 auf, welche beiderseits seitlich vom abragen. Dementsprechend weisen alle Trägerelemente 5, 5', 6, 6' jeweils eine für den Eingriff des Anschlagelements 20 vorgesehene Aussparung 21 auf. Vorzugsweise ist das Anschlagelement im Bereich des unteren Holmendes unterhalb des Bolzens 7 angeordnet. Im dargestellten montierten Zustand der Tragstruktur 1 umgreift die Aussparung 21 des Trägerelements 5' das Anschlagelement 20. Auf diese Weise wird eine Endposition beim Anfahren der zu befestigenden Tragstruktur 1 an die Holme 3, 3' definiert und dadurch eine maschinell durchgeführte Montage der Tragstruktur 1 erleichtert.

Anstelle des angeschweißten oder angeschraubten Flachmaterials 20 kann auch ein abragender Bolzen oder ein andersartig geformtes Anschlagelement 20 vorgesehen sein. Vorzugsweise wird die Profilierung des Randabschnitts des Trägerelements 5' angepasst an die Form des Anschlagelements ausgeformt. Abweichend von der in Fig. 4 dargestellten Form können die Flanken der Aussparung 21 beispielsweise abschnittsweise V-förmig ausgebildet sein, wodurch die Selbstzentrierung der Tragstruktur 1 beim Anfahren an die Holme 3, 3' weiter verbessert wird.

Die endgültige Befestigung der Tragstruktur 1 bzw. der Trägerelemente 5, 5', 6, 6' an den Holmen 3, 3' erfolgt dann über eine Klemmverschraubung. Hierfür sind in den Holmen 3, 3' und in den Trägerelementen 5, 5', 6, 6' korrespondierende Durchgangslöcher vorgesehen, in welche Schrauben 15 für die Klemmverschraubung eingesteckt werden. Durch Anziehen bzw. festes Eindrehen der Schrauben 15 in ein Gewinde werden die zunächst voneinander abgespreizten kurzen Schenkel der Trägerelemente 5, 5', 6, 6' zur klemmenden Anlage an die Wangen der Holme 3, 3' gebracht und so eine feste, jedoch lösbare Verbindung der Tragstruktur 1 mit den Holmen 3, 3' hergestellt. Bei der Anlage der Trägerelemente 5, 5', 6, 6' an die Wangen der Holme 3, 3' wird die V-förmige Abspreizung der Trägerelemente 5, 5', 6, 6' durch elastische Verformung bzw. Biegung zum größten Teil beseitigt.

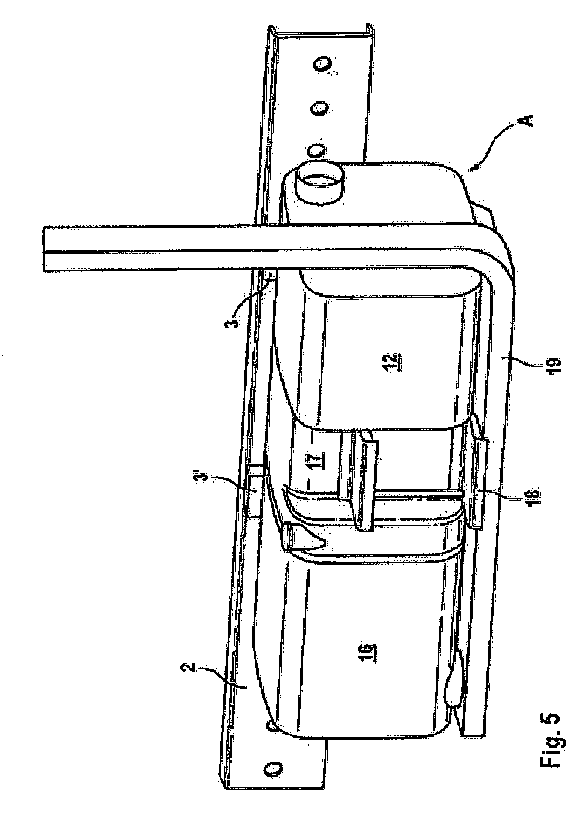

Erfindungsgemäß ist die Tragstruktur 1 zur Anbringung eines modularen Abgasreinigungssystems am Nutzfahrzeug vorgesehen. In Fig. 5 ist eine fertig an einem Längsträger 1 montierte Tragstruktur 2 mit dem zuvor darauf aufgebauten modularen Abgasreinigungssystem A dargestellt. Das Abgasreinigungssystem A umfasst hier ein erstes Abgasreinigungselement 12 sowie ein in Fahrtrichtung gesehen dahinter angeordnetes zweites Abgasreinigungselement 16. Zwischen den Abgasreinigungselementen 12, 16 ist ein Tank 17 für Harnstoff-Wasserlösung zur Abgasreinigung angeordnet. Ferner ist an der Tragstruktur 1 ein treppenförmiger, begehbarer Aufstieg 18 befestigt, der einen Zugang zu in größerer Höhe am Fahrzeug angeordneten Teilen ermöglicht. Auf diese Weise wird vorteilhaft die hohe Tragkraft der Tragstruktur 1 zur Befestigung des Aufstiegs 18 ausgenutzt. Die Abgasreinigungselemente 12, 16 sind als tonnenförmige Stahlgehäuse ausgebildet, die in ihrem Inneren verschiedene Abgaskatalysatoren und/oder Partikelfilterelemente aufweisen und gleichzeitig als Schalldämpfer fungieren. Eine zugehörige Abgasleitung 19 ist seitlich am Auflagerahmen 4 entlang geführt und in diesem Bereich als Leitung mit rechteckigem Querschnitt ausgeführt. Dabei ist sie von oben durch die Abgasreinigungselemente 12, 16 abgedeckt, die breiter als die Tragstruktur 1 ausgeführt sind und seitlich überstehen. Infolge der dadurch bewirkten Abdeckung der im Betrieb heißen Abgasleitung 19 wird gleichzeitig deren versehentliche Berührung verhindert. Es ist vorgesehen, dass die Tragstruktur 1 eine nicht näher dargestellte Befestigungsmöglichkeit für die Abgasleitung 19 vorzugsweise an der dem Längsträger 2 abgewandten Seite aufweist, so dass die Abgasleitung 19 stabil gehalten ist.

Das auf der Tragstruktur 1 aufgebaute modulare Abgasreinigungssystem A kann je nach Anforderung unterschiedlich konfiguriert sein, wobei der Aufbau auf der für verschiedene Fahrzeugtypen einheitlich gestalteten Tragstruktur 1 erfolgt. Dabei ermöglicht es die erfindungsgemäße Tragstruktur 1 mit einem sehr hohen Gleichteileanteil unterschiedliche Gesamtsysteme entfernt und unabhängig von der Fertigungslinie des Nutzfahrzeugs montagefertig vorzubereiten und als kompakte Einheit in wenigen Schritten rasch und unter Vermeidung von Montagefehlern an unterschiedlichen Nutzfahrzeugtypen anzubringen.

## Patentansprüche

1. Tragstruktur (1) eines Nutzfahrzeugs, insbesondere zur Aufnahme eines modularen Abgasreinigungssystems (A), umfassend ein Paar annähernd parallel zueinander ausgerichtete L-förmige Trägerelemente (5, 5'; 6, 6') zur Montage an einem mit einem Längsträger (2) des Nutzfahrzeugs fest verbundenen Holm (3, 3'), wobei die ein Paar bildenden Trägerelemente (5, 5'; 6, 6') im montierten Zustand der Tragstruktur (1) den Holm (3, 3') anliegend umgreifen und im nicht montierten Zustand derart voneinander abgespreizt ausgebildet sind, dass ihr Abstand im Bereich der Anlage am Holm (3, 3') die Holmbreite um ein vorgebbares Maß überschreitet.

2. Tragstruktur nach Anspruch 1,
**dadurch gekennzeichnet, dass**
die Trägerelemente (5, 5'; 6, 6') an einem Bolzen (7, 7') des Holms (3, 3') einhängbar ausgebildet sind.

3. Tragstruktur nach Anspruch 1 oder 2,
**dadurch gekennzeichnet, dass**
wenigstens eines der Trägerelemente (5, 5'; 6, 6') einen profilierten Randabschnitt (21) zur Anlage an einem korrespondierenden Anschlagelement (20) des Holms (3; 3') aufweist.

4. Tragstruktur nach einem der Ansprüche 1 bis 3,
**dadurch gekennzeichnet, dass**
die Trägerelemente (5, 5'; 6, 6') mittels einer Schraubverbindung klemmend am Holm (3, 3') fixierbar sind.

5. Tragstruktur nach einem der Ansprüche 1 bis 4,
**dadurch gekennzeichnet, dass**
die Trägerelemente (5, 5'; 6, 6') mit einem Auflagerahmen (4) fest verbunden sind.

6. Tragstruktur nach Anspruch 5,
**dadurch gekennzeichnet, dass**
der Auflagerahmen (4) wenigstens zwei annähernd parallel verlaufende und rechtwinklig zu den Trägerelementen (5, 5'; 6, 6') orientierte biegesteife Längsstreben (8, 8') umfasst.

7. Tragstruktur nach Anspruch 6,
**dadurch gekennzeichnet, dass**
die Längsstreben (8, 8') an ihrem jeweiligen Endbereich über Querstreben (9, 9') miteinander verbunden sind.

8. Tragstruktur nach einem der Ansprüche 5 bis 7,
**dadurch gekennzeichnet, dass**
eine Abdeckplatte (10) zur Abdeckung der Oberseite und/oder der Unterseite des Auflagerahmens (4) vorgesehen ist.

9. Tragstruktur nach einem der Ansprüche 5 bis 8,
**dadurch gekennzeichnet, dass**
ein am Auflagerahmen (4) befestigtes Tragblech (14) an der dem Längsträger (2) zugewandten Seite des Auflagerahmens (4) vorgesehen ist.

10. Tragstruktur nach einem der Ansprüche 5 bis 9,
**dadurch gekennzeichnet, dass**
ein am Auflagerahmen (4) befestigter treppenförmiger Aufstieg (18) an der dem Längsträger (2) abgewandten Seite des Auflagerahmens (4) vorgesehen ist.

11. Tragstruktur nach einem der Ansprüche 1 bis 10,
**dadurch gekennzeichnet, dass**
im Bereich des Holms (3, 3') ein erstes Auflageelement (11, 11') zur Abstützung eines insbesondere tonnenförmigen Abgasreinigungselements (12, 12') des Abgasreinigungssystems (A) vorgesehen ist.

12. Tragstruktur nach Anspruch 11,
**dadurch gekennzeichnet, dass**
in einem dem Längsträger (2) abgewandten Bereich des Auflagerahmens (4) ein zweites Auflageelement (13, 13') zur Abstützung des Abgasreinigungselements (12, 12') des Abgasreinigungssystems (A) vorgesehen ist.

13. Tragstruktur nach Anspruch 11 oder 12,
**dadurch gekennzeichnet, dass**
am Auflagerahmen (4) eine Befestigung für eine wenigstens abschnittsweise unterhalb eines auf der Tragstruktur (1) befestigten Abgasreinigungselements (12, 12') verlaufenden Abgasleitung (19) vorgesehen ist.
